(19) **Europäisches Patentamt / European Patent Office / Office européen des brevets**

(11) **EP 1 698 602 B1**

(12) **EUROPÄISCHE PATENTSCHRIFT**

(45) Veröffentlichungstag und Bekanntmachung des Hinweises auf die Patenterteilung:
**18.03.2009  Patentblatt 2009/12**

(51) Int Cl.:
***C04B 28/14*** *(2006.01)*     ***C04B 24/42*** *(2006.01)*

(21) Anmeldenummer: **06003123.4**

(22) Anmeldetag: **16.02.2006**

(54) **Gipsmischung mit verbesserten mechanischen Eigenschaften und Verfahren zur Additivierung von Gips**

Gypsum mixture having improved mechanical properties and process for adding an additive to gypsum

Mélange de plâtre presentant des propriétés mécaniques améliorées et procédé d'ajouter un additif au plâtre

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.02.2005   DE 102005009234**

(43) Veröffentlichungstag der Anmeldung:
**06.09.2006   Patentblatt 2006/36**

(73) Patentinhaber: **Zylum Beteiligungsgesellschaft mbH & Co.
Patente II KG
12529 Schönefeld / Waltersdorf (DE)**

(72) Erfinder:
• **Nestler, Karl W.
97320 Sulzfeld (DE)**
• **Wienhold, Uwe, Dr.
39112 Magdeburg (DE)**
• **Dor Theodorescu, Marius
90419 Nürnberg (DE)**

(74) Vertreter: **Zech, Stefan Markus
Meissner, Bolte & Partner GbR
Widenmayerstrasse 48
80538 München (DE)**

(56) Entgegenhaltungen:
**WO-A-02/30847           WO-A-81/01702
GB-A- 1 522 995**

## Beschreibung

Die vorliegende Erfindung betrifft Gipsmischungen, die durch Zusatz einer neuartigen Additivmischung verbesserte mechanische und hydrophobe Eigenschaften aufweisen sowie ein Verfahren zur Herstellung solcher Gipsmischungen durch Additivierung von Gips mit speziellen Silanen und Metallsalzen.

Bei der Herstellung von Gipserzeugnissen insbesondere Gipsformkörpern wie z.B. Gipskartonplatten gilt es, im wesentlichen zwei Eigenschaften zu verbessern: Dies sind zum einen die mechanische Festigkeit, insbesondere die Biegefestigkeit, und zum anderen die Wasserbeständigkeit.

Eine Verbesserung der mechanischen Festigkeit wird nach dem Stand der Technik durch Ausrüstung der Gipsprodukte mit Fasern wie beispielsweise Holz, Glas oder Zellulosefasern erreicht. Derartige Verfahren zur Modifizierung von Gips mit Fasern werden beispielhaft in der EP 1404512 und der dort zitierten Sekundärliteratur beschrieben. Nachteilig an der Fasermodifizierung ist der hohe Anteil an Fasern, der dem Gips zugesetzt werden muss, was eine starke Erhöhung des spezifischen Gewichtes zur Folge hat. Außerdem ist das Niveau der mechanischen Eigenschaften für bestimmte Anwendungen noch verbesserungsbedürftig.

Zur Verbesserung der Wasserbeständigkeit werden Gipsformkörper wasserabweisend ausgerüstet. Nach dem Stand der Technik kann dies prinzipiell entweder durch Aufbringen einer hydrophoben Beschichtung auf den Formkörper geschehen z.B. durch Behandlung mit Polysiloxan-haltigen Emulsionen, oder aber durch sog. Massehydrophobierung, bei der den Gipsbestandteilen Organosiliciumkonfektionierungen beigemischt werden. Die Massehydrophobierung ist wesentlich effizienter in Bezug auf eine Reduzierung der Wasseraufnahme und wird deshalb in der Industrie breit praktiziert. Entsprechende Verfahren verwenden typischerweise als Organosiliciumkomponente H-Siloxane und werden beispielhaft in der DE 10220659 A1 und der dort zitierten Sekundärliteratur beschrieben.

Weiterhin wird die Massehydrophobierung von Gips mit Hilfe von speziellen Silanen beschrieben:

Die DE 3041294 beschreibt hydrophobierte Formkörper aus Gips, die mit Hilfe von Ethyl- Propyl-oder Butylsilanolen und Alkalialuminaten wasserabweisend ausgerüstet werden, wobei die Silanole durch Hydrolyse der entsprechende Alkyltrialkoxysilane hergestellt werden. Die EP 0819663 beschreibt hydrophobierte Gipsformkörper, die durch Massehydrophobierung mit einer Mischung aus Alkyldialkoxy- oder Alkyltrialkoxysilanen und Aminoalkoxysilanen hergestellt sind, wobei die Alkylgruppen der Alkylalkoxysilane maximal 6 Kohlenstoffatome aufweisen. Die US-Patentschrift 5776245 beschreibt Mischungen von Silanen, vorzugsweise Aminosilanen mit Polysiloxanen zur Massehydrophobierung von Gips. Die WO 08101702 beschreibt ein Verfahren zur Hydrophobierung von Gips durch Zusatz von Alkoxysilanen, speziellen Emulgatoren und diversen Metallsalzkatalysatoren, welche bekannterweise die Silanolkondensation katalysieren. Gemäß der Lehre der WO 08101702 lässt sich eine Verbesserung der mechanischen Eigenschaften durch Zusatz von Alkoxysilanen und vergleichsweise hohen Anteilen an Kieselsäure erzielen. Der Zusatz von Kieselsäure als Verstärkungsfüllstoff ist jedoch unter Kostengesichtspunkten und aus Gründen der Arbeitshygiene unerwünscht.

Die bekannten Verfahren der Massehydrophobierung liefern für viele Anwendungsfälle zufrieden stellende Ergebnisse bezüglich der Verringerung der Wasseraufnahme der daraus hergestellten Gipsformkörper, haben jedoch keinen oder nur unzureichenden Einfluss auf die mechanischen Eigenschaften. Zusammenfassend lässt sich feststellen, dass bis heute kein Verfahren zur Additivierung von Gips existiert, das gleichzeitig eine Verringerung der Wasseraufnahme und eine Verbesserung der mechanischen Eigenschaften ermöglicht. Aufgabe der vorliegenden Erfindung war daher die Bereitstellung eines derartigen Verfahrens.

Gegenstand der vorliegenden Erfindung sind Gipsmischungen, in denen ein Additiv enthalten ist, wobei das Additiv im Wesentlichen besteht aus oder enthält:

A) mindestens ein Alkoxysilan der allgemeinem Formel

$$R_x Si(OR')_y$$

und/oder mindestens ein alkoxyfunktionalisiertes Polysiloxan enthaltend mindestens zwei gleiche oder verschiedene $SiR_m(-O\ R')_n$-Gruppen, wobei

R jeweils unabhängig voneinander ein substituierter oder unsubstituierter Aryl- oder Alkyl- oder Alkenylrest mit 1 bis 20 Kohlenstoffatomen ist,
x ist eine ganze Zahl von 0 bis 3,
R' ist jeweils unabhängig voneinander ein Alkylrest mit 1 bis 4 Kohlenstoffatomen,
y ist eine ganze Zahl von 1 bis 4,
wobei die Summe aus x+y = 4 ist, und
m ist eine ganze Zahl von 0 bis 2 und n ist eine ganze Zahl von 1 bis 3, wobei die Summe aus m+n ≤ 3 ist, und

B) mindestens einem Salz von Mineralsäuren und Metallen der Nebengruppen IIIB bis VIII, IB oder IIB des Periodensystems der Elemente,

wobei gegebenenfalls weitere Zusätze, Additive oder Hilfsstoffe enthalten sind.

Gegenstand der vorliegenden Erfindung ist auch ein Verfahren zur Herstellung von verbesserten Gipsmischungen durch Additivierung von Gips mit Silanen oder Oligosilanen nach Anspruch 1, d.h. Alkoxysilane oder Polysiloxane mit Alkoxygruppen als funktionelle Gruppen, und Metallsalzen. Gegenstand der vorliegenden Erfindung sind schließlich auch Gipsformkörper bzw. Gipskartonplatten enthaltend oder zumindest im Wesentlichen bestehend aus der erfindungsgemäßen Gipsmischung.

Der Erfindung liegt die überraschende Beobachtung zugrunde, dass die Additivierung von Gips mit bestimmten, nachstehend näher beschriebenen Silanen nach Anspruch 1, genauer gesagt Alkoxysilane oder Polysiloxane mit funktionellen Alkoxygruppen, in Kombination mit nachstehend näher spezifizierten Metallsalzen die Herstellung von Formkörpern ermöglicht, die eine ausgezeichnete Wasserfestigkeit bzw. sehr geringe Wasseraufnahme und gleichzeitig eine stark verbesserte Biegefestigkeit aufweisen. Dabei ermöglicht erst die Kombination der erfindungsgemäßen Additivkomponenten A) und B) eine gleichzeitige Verbesserung von Hydrophobie und mechanischen Eigenschaften und ist der bekannten Additivierung mit Silanen somit technisch überlegen. Dies wird durch entsprechende, weiter hinten angeführte Vergleichsversuche belegt.

Im Hinblick auf die Lehre der WO 08101702 muss festgestellt werden, dass die erfindungsgemäß als Komponente B) einsetzbaren Salze von Mineralsäuren und Metallen der Nebengruppen IIIB bis VIII, IB oder IIB des Periodensystems der Elemente grundsätzlich verschieden sind von den in dieser Vorveröffentlichung genannten Metallsalzen und keine Metallsalze darstellen, die die Silanolkondensation in nennenswertem Umfang katalysieren. Vorzugsweise haben die erfindungsgemäß eingesetzten Komponenten B praktisch keine oder keine diesbezüglichen katalytischen Eigenschaften.

Als Gips sind im Rahmen der vorliegenden Erfindung prinzipiell alle technisch verfügbaren Gipstypen einsetzbar wie beispielsweise Estrichgips, Marmorgips, Alabastergips, Anhydrit oder das bei der Rauchgasentschwefelung anfallende Calciumsulfat. Bevorzugt zur Herstellung von Gipsformkörpern im Rahmen der vorliegenden Erfindung einsetzbar ist Plaster ($CaSO_4 \cdot 0,5\ H_2O$), in Form von Baugips, Stuckgips oder Isoliergips.

Die Gipsmischung kann weiterhin Zusätze enthalten, die beispielsweise die Verarbeitung der Gipsmischung erleichtern oder die Eigenschaften der aus diesen hergestellten Produkten verbessern oder anderen Zwecken dienen. Beispielsweise können die Zusätze die Herstellung von Gipsformkörpern oder Gipskartonplatten erleichtern oder die Eigenschaften von Gipsformkörpern oder Gipskartonplatten verbessern. Derartige Zusätze sind beispielsweise Zement, Füllstoffe wie Siliziumdioxid, Silikate, Mineralfasern, Glasfasern, organische Fasern wie beispielsweise Holz- oder Zellulosefasern, Beschleuniger wie beispielsweise Aluminiumsulfat oder Kaliumsulfat, Verzögerer wie beispielsweise Eiweiße oder Weinsäuresalze, Plastifizierungsmittel für den Gipsbrei wie beispielsweise Ligninsulfonat oder auch Haftvermittler für Karton wie zum Beispiel Stärke.

Die Zusätze zu dem Gips können insgesamt in einem Anteil von ≤ 50 Gew.-%, vorzugsweise ≤ 25 Gew.-%, insbesondere ≤ 5-10 Gew.-%, bezogen auf das Trockengewicht der Gipsmischung enthalten sein.

Vorzugsweise weist das mindestens eine Alkoxysilan die allgemeine Formel $R_xSi(OR')_y$ auf, wobei das Polysiloxan enthaltend mindestens zwei $SiR_m(-OR')_n$-Gruppen insbesondere ein Kondensationsprodukt eines oder mehrerer der genannten Silane sein kann, wobei R jeweils unabhängig voneinander ein gegebenenfalls substituierter oder unsubstituierter Aryl- oder Alkyl- oder Alkenylrest mit 1 bis 20 Kohlenstoffatomen ist,

x ist eine ganze Zahl zwischen 0 und 3,

R' ist unabhängig voneinander ein Alkylrest mit 1 bis 4 Kohlenstoffatomen,

y ist eine ganze Zahl zwischen 1 und 4,

wobei die Summe aus x+y = 4 ist, und wobei

m ist eine ganze Zahl von 0 bis 2 und n ist eine ganze Zahl von 1 bis 3, wobei die Summe aus m+n ≤ 3 ist.

Das erfindungsgemäß eingesetzte Polysiloxan weist somit mindestens eine Alkoxygruppe als funktionelle Gruppe auf.

Das mindestens eine enthaltene Polysiloxan kann jeweils 2 bis 20 oder auch mehr Si-Atome aufweisen, beispielsweise 2 bis 6 oder bis 10, die jeweils unter Bildung einer -Si-O-Si-Gruppe verbrückt sind. Ist m+n < 3, so werden sie freien Valenzen des Polysiloxane vorzugsweise durch -O- Brücken, die zu anderen $SiR_m(-OR')_n$-Gruppen verbrücken, oder gegebenenfalls auch Halogen gesättigt. Die Polysiloxane können jeweils insbesondere Kondensationsprodukte der im Gemisch mit diesen vorliegenden Silane darstellen. Das erfindungsgemäß einsetzbare Polysiloxan weist in der Regel zwei oder mehr Alkoxygruppen auf, vorzugsweise sind an zumindest zwei oder mehr oder sämtlichen Si-Atomen des Polysiloxangerüstes Alkoxygruppen gebunden. Vorzugsweise ist jeweils mindestens eine Alkoxygruppe je Si-Atom des Siloxan-Gerüstes vorhanden, d.h. n = 1 für alle Si-Gruppen. Gegebenfalls kann n für zumindest eine, einige oder alle Si-Gruppen 2 sein. Gegebenenfalls kann aber auch ein Polysiloxan vorliegen, das nur an einem Si-Atom des Polysiloxangerüstes eine Alkoxygruppe aufweist, wobei die anderen Si-Atome nur Reste R aufweisen.

Das mindestens eine erfindungsgemäß eingesetzte Polysiloxan kann linear sein, insbesondere gemäß der Formel $R[Si(OR')_2\text{-}O]_a R'$ oder $R[Si(OR')_2\text{-}O]_b Si(OR')_2 R$ mit a, b eine ganze Zahl, vorzugsweise für a zwischen 2 und 10 oder 20 und für b zwischen 1 und 10 oder 20, oder verzweigt oder cyclisch sein. Insbesondere kann ein Gemisch linearer, verzweigter und/oder cyclischer Polysiloxane vorliegen, jeweils vorzugsweise als Kondensationsprodukte der genannten Silane. Gegebenenfalls kann ein gewisser Anteil oder das gesamte vorliegende Polysiloxan vernetzt sein.

Der organische Rest R ist vorzugsweise jeweils durch eine C-Si-Bindung mit dem Siliciumatom des Alkoxysilans oder Polysiloxans verknüpft.

Insbesondere kann das Polysiloxan jeweils ein Kondensationsprodukt der weiter unten genannten Alkoxysilane sein.

Es versteht sich, dass im Folgenden von dem Begriff "Alkoxysilan" auch die erfindungsgemäß eingesetzten Polysiloxane verstanden werden, falls sich aus dem Gesamtzusammenhang nichts anderes ergibt.

Die Reste R können in dem jeweiligen Alkoxysilan oder Polysiloxan jeweils gleich oder auch verschieden sein. Entsprechendes gilt für die Reste R'.

Insbesondere kann R jeweils unabhängig voneinander ein substituierter oder unsubstituierter Aryl- oder Alkyl- oder Alkenylrest mit 1 bis 6, im Falle von Alkyl und/oder Alkenyl auch mit 1 bis 4 oder 1 bis 2 Kohlenstoffatomen sein.

Ferner kann R jeweils unabhängig voneinander ein substituierter oder unsubstituierter Aryl- oder Alkyl- oder Alkenylrest mit 7 bis 20, insbesondere 7 bis 18 Kohlenstoffatomen sein. Hierdurch kann gesteuert werden, ob durch das jeweilige Additiv verstärkt die mechanischen Eigenschaften des aus der Gipsmischung hergestellten Produktes oder dessen Wasseraufnahme verbessert wird.

Es versteht sich, dass gegebenenfalls auch innerhalb eines Alkoxysilans oder in verschiedenen Alkoxysilanen des erfindungsgemäßen Additivs die oben genannten Reste R mit jeweils 1 bis 6 Kohlenstoffatomen einerseits und mit 7 bis 20 Atomen andererseits nebeneinander vorliegen können.

Mindestens einer, mehrere oder sämtliche Reste R können insbesondere jeweils unabhängig voneinander ein Alkylrest sein. R kann jeweils auch innerhalb eines Alkoxysilans oder Polysiloxans gleich sein.

Im Besonderen können einer oder mehrere der Reste R ein Alkylenrest sein, insbesondere ausgewählt aus der Gruppe Vinyl oder Allyl.

Im Besonderen können einer, mehrere oder ggf. auch sämtliche der Reste R ein Arylrest sein, insbesondere ausgewählt aus der Gruppe Phenyl und Benzyl. Insbesondere können mindestens ein Rest oder sämtliche Reste R jeweils Phenyl oder Benzyl sein.

R kann jeweils insbesondere unsubstituiert sein.

R' kann jeweils 1 bis 4 Kohlenstoffatome aufweisen. R' kann geradkettig oder verzweigt sein. Besonders bevorzugt hat R' 1 oder 2 Kohlenstoffatome und kann unabhängig ausgewählt sein aus der Gruppe Methyl und Ethyl. Insbesondere kann R' jeweils Methyl oder Ethyl sein.

Ferner kann R' jeweils insbesondere unsubstituiert sein.

Insbesondere kann x jeweils 0 sein. x kann insbesondere auch 1 sein.

Der jeweilige Alkylrest oder Alkenylrest R kann jeweils linear oder verzweigt oder zyklisch sein. Insbesondere kann der Alkylrest linear sein, was auch für den Alkylenrest gelten kann.

Das Additiv kann im Wesentlichen nur eines der erfindungsgemäß verwendeten Alkoxysilane enthalten, es können auch mehrere Alkoxysilane enthalten sein. Die Alkoxysilane können jeweils von einem Typ sein, d.h. x ist für alle Alkoxysilane gleich, es können auch Alkoxysilane mit verschiedenem x nebeneinander vorliegen. Es versteht sich, dass das Additiv erfindungsgemäß auch ein oder mehrere verschiedene der genannten Alkoxysilane oder Alkoxysilane in Kombination mit Oligomeren (Polysiloxane) enthalten kann.

Der jeweilige Alkylrest R kann jeweils unabhängig voneinander linear oder verzweigt oder zyklisch sein, vorzugsweise ist er linear.

Der jeweilige Alkylrest R kann nach einer bevorzugten Ausführungsform 1 bis 6 oder 1 bis 4 Kohlenstoffatome oder 1 bis 2 Kohlenstoffatome aufweisen. Hierdurch können gegebenenfalls die aus den Gipsmischungen hergestellten Produkte wie Gipsformkörper oder Gipskartonplatten verbesserte mechanische Eigenschaften aufweisen. Die Alkyl- oder Alkenylreste können nach einer anderen alternativen Ausführungsform auch 7 bis 18 oder bis 20, beispielsweise 10 bis 18 Kohlenstoffatome aufweisen, wodurch Gipsmischungen und aus diesen hergestellte Produkte wie Gipsformkörper oder Gipskartonplatten mit geringem Wasseraufnahmevermögen herstellbar sind.

Vorzugsweise ist R jeweils unabhängig ausgewählt aus der Gruppe Methyl, Ethyl, Propyl und Phenyl, insbesondere jeweils Methyl.

Beispiele für erfindungsgemäß geeignete Alkoxysilane sind Kieselsäureester der allgemeinen Formel $Si(OR)_4$ wie Tetraethoxysilan, Tetramethoxysilan oder Alkyltrialkoxysilane der allgemeinen Formel $RSi(OR)_3$ wie Methyltrimethoxysilan, Ethyltrimethoxysilan, Vinyltrimethoxysilan, Propyltrimethoxysilan, Butyltrimethoxysilan, Phenyltrimethoxysilan, Octyltrimethoxysilan, Decyltrimethoxysilan, Dodecyltrimethoxysilan, Hexadecyltrimethoxysilan, Octadecyltrimethoxy-silan sowie die entsprechenden Triethoxysilane. Das Additiv kann insbesondere eines dieser Alkoxysilane oder mehrere Alkoxysilane ausgewählt aus dieser Gruppe enthalten.

Erfindungsgemäß einsetzbar sind weiterhin Alkyltrialkoxysilane der allgemeinen Formel $RSi(OR)_3$, bei denen

der Rest R eine funktionelle Gruppe, wie beispielsweise eine Aminogruppe, Thiolgruppe, Ureidogruppe, halogenierte Gruppen und/oder eine Epoxygruppe tragen kann. Das Halogen kann jeweils insbesondere Chlor, gegebenenfalls auch Fluor oder Brom sein. Beispiele für solche erfindungsgemäß einsetzbaren Alkoxysilane sind Glycidyloxypropyltrimethoxysilan, 3-Aminopropyl-trimethoxysilan, 3-Aminopropyltriethoxysilan, N-2-Aminoethyl-3-aminopropyltri-methoxysilan, 3-Aminopropyldiethoxymethylsilan, 3-Mercaptopropyltrimethoxy-silan oder 3-Mercaptopropyltriethoxysilan. Das Additiv kannn insbesondere eines dieser Alkoxysilane oder mehrere Alkoxysilane ausgewählt aus dieser Gruppe enthalten.

Bevorzugt einsetzbar im Rahmen der vorliegenden Erfindung sind Tetraethoxysilan und unsubstituierte Alkylalkoxysilane wie Methyltrimethoxysilan, Ethyltrimethoxysilan, Propyltrimethoxysilan, Butyltrimethoxysilan, Octyltrimethoxysilan, Decyltrimethoxysilan, Dodecyltrimethoxysilan, Hexadecyltrimethoxysilan, Octadecyltrimethoxysilan und die entsprechenden Triethoxysilane.

Besonders bevorzugt einsetzbar als Komponente A) im Rahmen der vorliegenden Erfindung sind Alkylalkoxysilane der allgemeinen Formel $R\text{-}Si(OR')_3$, worin R für einen linearen oder verzweigten Alkylrest mit 4 bis 18 Kohlenstoffatomen steht und R' für eine Methyl- oder eine Ethylgruppe steht. Beispiele für derartige besonders bevorzugt als Komponente A) einsetzbaren Alkylsilane sind Butyltrimethoxysilan, Octyltrimethoxysilan, Decyltrimethoxysilan, Dodecyltrimethoxysilan, Hexadecyltrimethoxysilan oder Octadecyltrimethoxysilan sowie die entsprechenden Triethoxysilane.

Insbesondere kann die Komponente A eines oder mehrere der Alkoxysilane ausgewählt aus der Gruppe Tetraethoxysilan, Chlorpropyl-Triethoxysilan, Octyl-Triethoxysilan, Hexadecyl-Trimethoxysilan, Methyl-Triethoxysilan sein und/oder ein oligomeres Kondensationsprodukt dieser Alkoxysilane, einschließlich gemischter Oligomere.

Insbesondere kann die Komponente A eines oder mehrere der Alkoxysilane ausgewählt aus der Gruppe Tetraethoxysilan, Octyl-Triethoxysilan, Hexadecyl-Trimethoxysilan, Methyl-Triethoxysilan sein und/oder ein oligomeres Kondensationsprodukt dieser Alkoxysilane, einschließlich gemischter Oligomere.

Insbesondere kann die Komponente A ein Gemisch der Alkoxysilane Tetraethoxysilan und Hexadecyl-Trimethoxysilan sein oder ein Gemisch der Alkoxysilane Tetraethoxysilan und Octyl-Triethoxysilan, wobei die genannten Alkoxysilane in einem Gewichtsverhältnis von 5:1 bis 1:5, z.B. 3:1 bis 1:3 vorliegen können, ohne hierauf beschränkt zu sein.

Sind die Alkoxysilane substituiert, insbesondere die Alkyl-, Alkenyl- oder Arylgruppen derselben, so können diese einfach oder mehrfach substituiert sein. Die Substituenten können sein eine funktionelle Gruppe, wie beispielsweise eine Aminogruppe, Thiolgruppe, Ureidogruppe, Carboxygruppe, Estergruppe, halogenierte Gruppen und/oder eine Epoxygruppe, gegebenenfalls auch eine Alkoxy- oder Monoalkyl- oder Dialkylaminogruppe. Das Halogen kann jeweils insbesondere Chlor, gegebenenfalls auch Fluor oder Brom sein. Die Substituenten können auch jeweils ein, zwei, drei, vier oder mehr Si-Atome aufweisen, so dass auch mehrkernige Silane vorliegen können. Vorzugsweise sind die Si-Atome jeweils mit Alkyl- oder Alkoxygruppen substituiert, für welche jeweils die Ausführungen zu R' gelten können.

Alle erfindungsgemäß einsetzbaren Alkoxysilane können selbstverständlich auch in Form ihrer Oligomerisate eingesetzt werden, die nach bekannten Verfahren der Vorhydrolyse aus den Silanen herstellbar sind.

Erfindungsgemäß wird dem Gips zur Additivierung als Komponente B) mindestens ein Salz von Mineralsäuren und Metallen der Nebengruppen IIIB (enthaltend Sc usw.) bis VIII (enthaltend Fe, Co, Ni usw.), IB oder IIB (nach älterer Nomenklatur auch Nebengruppen IIIA bis VIIIA, IB, IIB) des Periodensystems der Elemente zugesetzt, bevorzugt Salze der Metalle IVB (enthaltend Ti usw.) bis VIII, IB oder IIB. Besonders bevorzugt ist das Metall ein solches der ersten Übergangsmetallperiode. Als Mineralsäuren seien an dieser Stelle beispielhaft Salpetersäure, Schwefelsäure, Phosphorsäure, Salzsäure und Kohlensäure genannt.

Vorzugsweise werden als Komponente B) mineralsaure Salze des Titan, Vanadium, Mangan, Eisen, Cobalt, Nickel, Kupfer oder Zink oder Kombinationen derselben eingesetzt, insbesondere auch Salze der Metalle der Gruppe Eisen, Kupfer, Zink oder bevorzugt auch Eisen- und/oder Kupfersalze. Beispiele für bevorzugt als Komponente B) einsetzbare Metallsalze sind: Titanylsulfat, Vanadiumsulfat, Mangan(II)sulfat, Mangan(II)chlorid, Eisen(II)-chlorid, Eisen(II)sulfat, Eisen(II)carbonat, Eisen(III)chlorid, Eisen(III)chlorid, Kobalt(II)chlorid, Nickel(II)chlorid, Nickel(II)sulfat, Kupfer(I)chlorid, Kupfer(II)chlorid, Kupfer(II)sulfat, Zink(II)chlorid oder Zink(II)sulfat. Die Salze können jeweils auch Oxometallsalze der genannten Metalle sein, beispielsweise Titanylsalze, Vanadylsalze.

Die Komponente B kann jeweils nur eines der genannten Metalle enthalten oder Mischungen derselben. Entsprechendes gilt für die genannten Metallsalze.

In der erfindungsgemäßen Gipsmischung liegt vorzugsweise die Komponente A) bezogen auf das Trockengewicht der Gipsmischung in einem Gehalt von 0,1 bis 5 Gew.-%, vorzugsweise 0,3 bis 2 Gew.-%, insbesondere ca. 0,3 bis 1,5 Gew.-%, besonders bevorzugt 0,5 bis 1 Gew.-% vor.

Die Komponenten A) und B) können in der Gipsmischung in einem Gewichtsverhältnis von A:B von 10:1 bis 1:10, vorzugsweise 5:1 bis 1:5, besonders bevorzugt ca. 2:1 bis 1:2 vorliegen.

Bevorzugt werden als Komponente B) mineralsaure Salze des Eisens insbesondere mineralsaure Salze des zweiwertigen Eisens eingesetzt. Besonders bevorzugt ist die Verwendung von Eisen(II)sulfat als Komponente B).

Die erfindungsgemäße Komponente A) kann dem Gips in Mengen von 0,1% bis 5%, vorzugsweise 0,5% bis 1,5%, besonders bevorzugt 0,5 - 1% bezogen auf das Gewicht des Gipses zugesetzt werden. Die erfindungsgemäße Komponente B) kann dem Gips - unabhängig von der gewählten Menge an Komponente A)- in Mengen von 0,1% bis 3%, vorzugsweise 0,3% bis 1,5%, besonders bevorzugt 0,5% - 1% bezogen auf das Gewicht des Gipses zugesetzt werden. Eventuell bereits in Spuren im Gips vorhandene Metallsalze im Sinne der Definition der Komponente B) der vorliegenden Erfindung bleiben hierbei unberücksichtigt.

Die Mengen an Additivkomponenten A) und B) werden im allgemeinem so bemessen, dass ein für die gewünschte Anwendung ausreichendes Eigenschaftsniveau bezüglich Hydrophobie und Biegefestigkeit bei gleichzeitig akzeptablem Preisniveau erreicht wird. Die Mengen an Additivkomponenten A) und B) sind im Einzelfall experimentell zu ermitteln.

Die erfindungsgemäß einsetzbaren Alkoxysilane oder Polysiloxane sind somit jeweils alkoxyfunktionalisierte Verbindungen, die aufgrund der Alkoxygruppen einer intermolekularen Polykondensation unter Bildung von -Si-O-Si-Gruppen zugänglich sind. Dies wird insbesondere auch dadurch unterstützt, dass die Reste R mit 1 bis 20 Kohlenstoffatomen keine polymeren oder hochmolekularen Gerüste darstellen. Ferner versteht es sich, dass die Zubereitung der die Additivkomponenten A und B enthaltenden Gipsmischung derart erfolgt, dass die Silanpolykondensation der Komponente A in Gegenwart der Komponente B und des Gipses erfolgt, vorzugsweise bei homogen in die Gipsmischung eingearbeiteten Komponenten A und B. Insbesondere kann das Verfahren so gesteuert werden, dass die Polykondensation während des Abbindens des Gipses erfolgt. Hierzu sind die Gesamtdauer der vor der Einarbeitung der Komponenten A und B in die Gipsmischung oder der vor dem Abbinden der Gipsmischung durchzuführenden Verfahrensschritte, in welchen eine vorzeitige unerwünscht Hydrolyse der erfindungsgemäßen Alkoxyverbindungen erfolgen könnte, geeignet zu bemessen. Insbesondere gilt dies für die Mischzeit der Komponenten A und B mit Wasser oder die Dauer anderer Verarbeitungsschritte, bei welcher eine unerwünscht vorzeitige Hydrolyse der genannten Alkoxygruppen auftreten könnte, die Zugabedauer der Gipsmischung zu den Komponenten A und B und die Homogenisierungsdauer der Gipsmischung mit den übrigen Additiven. Die wässrige Phase enthaltend die Komponente A wird somit stets frisch hergestellt. Sollte einer der Reste R eine polymerisierbare funktionelle Gruppe enthalten, z.B. ungesättigte Gruppen oder radikalisch polymerisierbare Gruppen, so wird das Verfahren so durchgeführt, dass eine Polymerisation dieser Gruppen nicht erfolgt oder in nennenswertem Umfang erst nach der Polykondensation der Alkoxysilane, so dass die erfindungsgemäß eingesetzten Alkoxysilane und Polysiloxane keine derartigen polymeren Gruppen enthalten. Es versteht sich, dass die jeweiligen Verarbeitungszeiten von der Hydrolyseneigung der verwendeten Komponente A und ggf. weiteren Verfahrensbedingungen wie der Temperatur abhängen. Bei Verwendung durchschnittlich schnell hydrolisierender Verbindungen als Komponente A und üblicher Verarbeitungszeiten und Verarbeitungsbedingungen wie z.B. der Temperatur, wie sie bei der Herstellung von Gipsformkörpern vorgenommen werden, werden diese Bedingungen jedoch eingehalten. Dies gilt insbesondere für eine industrielle Herstellung von Gipsformkörpern, wie z.B. Gipskartonplatten. Die Gesamtherstellungsdauer bis zur Formung der Gipsformkörper aus der Gipsmischung liegt somit in der Regel unterhalb einer bis zwei Stunden, wobei zumeist keine besondere Temperaturbehandlung erfolgt, von der üblichen Reaktionswärme abgesehen. Lediglich der Vollständigkeit halber sei angemerkt, dass sich das erfindungsgemäße Verfahren hierdurch von Verfahren unterscheidet, bei welchen z.B. siliziumfunktionelle Copolymere bei höheren Temperaturen und langen Polymerisationszeiten zu wässrigen Polymerdispersionen umgesetzt werden.

Im erfindungsgemäßen Verfahren können die Komponenten A) und B) in beliebiger Reihenfolge mit Wasser vermischt werden, wobei ggf. geeignete Emulgatoren oder auch organische Lösungsmittel wie Alkohole mitverwendet werden können. Aus dem oben Gesagten ergibt sich, dass hier vorzugsweise eine bei der Herstellung von Gipsformkörpern übliche Mischzeit einzuhalten ist. Die Mischzeit beträgt üblicherweise < 1/4 oder ≤ 1/2 Stunde. Die Mitverwendung von Emulgatoren oder organischen Lösemitteln ist hierbei jedoch keineswegs bevorzugt. Gegebenenfalls kann auch eine der Komponenten, z.B. das Metallsalz, zusammen mit dem Gips der anderen Komponente zugefügt werden.

Zur Herstellung eines Gipsbreis wird anschließend Gips zugegeben, wobei die Menge an Wasser typischerweise so bemessen wird, dass auf 100 Gew.-Teile Gips 30-120 Gewichtsteile Wasser, idealerweise 50-90 Gewichtsteile Wasser entfallen. Gegebenenfalls kann die wässrige Phase auch dem Gips zugegeben werden, was verfahrenstechnisch jedoch nachteilig ist. Der Mischvorgang wird hierbei vorzugsweise so gestaltet, dass eine gleichmäßige Dispergierung der erfindungsgemäßen Additivmischung im Gips gewährleistet ist. Das Vermischen der Komponenten A) und B) kann im Übrigen mit der Gesamtmenge Wasser oder auch nur mit einer Teilmenge Wasser erfolgen. Die oben genannten Mengenverhältnisse sind aber in jedem Fall einzuhalten. Der Gipsbrei kann bei Bedarf durch Einarbeiten von Luft aufgeschäumt werden.

Die Verarbeitungszeit der Zugabe des Gipses zu den Komponenten A und B (oder anders herum) und Herstellung eines homogenen Gipsbreies sowie Formgebung desselben beträgt in der Regel weniger als 1/2 Stunde, zumeist weniger als 15-20 Minuten.

Zur Herstellung von Gipsformkörpern wird der im erfindungsgemäßen Verfahren hergestellte Gipsbrei zwecks Formgebung in eine geeignete Form eingebracht oder auf andere geeignete Weise geformt, worauf sich eine Trocknung in einem Trockenofen anschließen kann, gegebenenfalls nach einer geeigneten Vortrocknung. Im Rahmen der vorliegenden Erfindung hat sich überraschenderweise gezeigt, dass der erfindungsgemäß hergestellte additivierte Gipsbrei eine verkürzte Abbindezeit im Vergleich zu nicht additiviertem Gips aufweist. Dies ist insbesondere für die industrielle Fertigung von Gipsformkörpern, insbesondere Gipskartonplatten von Vorteil.

Es versteht sich, dass das erfindungsgemäß eingesetzte Additiv vorzugsweise gleichmäßig in der Gipsmischung eingearbeitet oder dispergiert ist, um eine Massehydrophobierung zu erzielen, gegebenenfalls kann das Additiv jedoch auch durch Oberflächenauftrag auf ein Gipsformteil oder eine Gipsplatte aufgebracht werden, wobei das Gipsformteil im wesentlichen oberflächlich mit dem Additiv versehen oder praktisch vollständig von diesem durchtränkt sein kann. Die Durchtränkung kann gleichmäßig oder unter Ausbildung eines Gradienten erfolgen.

Zur Herstellung derartiger Gipskartonplatten wird der Gipsbrei auf ein Transportband aufgebracht, das einen geeigneten Karton transportiert. Bei Bedarf wird auch die Oberfläche des Gipses mit einem Karton abgedeckt. Nach dem Abbinden werden die Gipskartonplatten auf das gewünschte Maß zugeschnitten und in einem geeigneten Ofen getrocknet.

Das Wesen der Erfindung wird anhand der nachfolgenden Ausführungsbeispiele näher erläutert. Ein Vergleich der erfindungsgemäßen Beispiele mit den nicht erfindungsgemäßen Beispielen soll insbesondere die Verbesserungen im Hinblick auf die bekannte Additivierung mit Aloxysilanen demonstrieren.

Ausführungsbeispiele:

Allgemeine Arbeitsvorschrift:

Gemäß den Mengenangaben der nachstehenden Tabelle wird Wasser mit dem Alkoxysilan und dem Metallsalz innig vermischt. Dabei entstehen homogene oder auch heterogene Mischungen. Anschließend wird ein Gipsbrei durch Einbringen eines handelsüblichen Baugipses in diese Mischungen hergestellt. Die Gesamtdauer dieser Verfahrensschritte beträgt üblicherweise 15-30 Minuten.

Nach intensivem Vermischen wurden aus dem Gipsbrei Gipsformkörper mit einer Länge von 200mm, einer Breite von 20mm und einer Dicke von 15mm durch Einbringen in eine entsprechende Form hergestellt. Nach dem Abbinden wurden die Gipsformkörper der Form entnommen und 1 Stunde bei 150°C getrocknet.

Die Messung der Wasseraufnahme erfolgte durch Messung der Gewichtszunahme nach 15-minütigem Einlegen der Prüfkörper in Wasser bei 20°C.

Die Berechnung der Biegezugfestigkeit Sigma erfolgte aus der Prüfung des Bruchverhaltens unter Gewichtsbelastung nach folgender Formel:

Abmessung Gipsrohling [mm]: 200 x 15 x 20 (Länge, Dicke, Breite)

Berechnung Biegezugfestigkeit [Kg/cm2]:

$$\mathtt{Sigma = (P \times a \times b)/ (L \times w) ;}$$

P = Belastung (Kg) a = linker Belastungsabstand (cm)
b = rechter Belastungsabstand (cm)
L = Spannweite (cm)
W = Widerstandsmoment

$$\mathtt{W = d \times d \times b\ /6}$$

d= Dicke (cm)
b= Breite (cm)

Die Prüfergebnisse sind in der nachstehenden Tabelle zusammengefasst. Ein Vergleich der erfindungsgemäßen Beispiele VG3 bis VG 10 mit den nicht erfindungsgemäßen Beispielen VG1 und VG 2 soll das Wesen der Erfindung näher erläutern.

| Versuch | TEOS [ml] | $FeSO_4$ [gr] | $CuSO_4$ [gr] | HDTMS [ml] | OTEO [ml] | Cl-PTEO [ml] | MTEO [ml] | Gips [gr] | $H_2O$ [ml] | WAV (%) | BZF [kg/cm$^2$] |
|---|---|---|---|---|---|---|---|---|---|---|---|
| Nullprobe | | | | | | | | 100 | 50 | 32,00 | 29 |
| VG 1 | 1 | | | | | | | 100 | 50 | 28,00 | 32 |
| VG 2 | 1 | | | 0,25 | | | | 100 | 50 | 25,50 | 30 |
| VG 3 | 1 | 0,3 | | | | | | 100 | 50 | 24,00 | 42 |
| VG 4 | 1 | 0,3 | | 0,25 | | | | 100 | 50 | 20,00 | 38 |
| VG 5 | 1 | 0,3 | | | 0,25 | | | 100 | 50 | 20,00 | 40 |
| VG 6 | | 0,3 | | | | | 1 | 100 | 50 | 15,00 | 44 |
| VG 7 | 0,5 | 0,5 | | 0,25 | | | | 100 | 50 | 13,00 | 35 |
| VG 8 | 0,5 | | 1 | | | | | 100 | 50 | 22,50 | 33 |
| VG 9 | 0,5 | 0,5 | | 1 | | | | 100 | 50 | 10,00 | 35 |
| VG 10 | 0,5 | 0,5 | | | | 0,25 | | 100 | 50 | 18,00 | 38 |

TEOS      Tetraethoxysilan
$FeSO_4$      Eisen-(II)-sulfat
$CuSO_4$      Kupfer-(II)-sulfat
Cl-PTEO      Chlor-Propyl-Triethoxysilan
OTEO      Octyl-Triethoxysilan
HDTMS      Hexadecyl-Trimethoxysilan
$H_2O$      Wasser
MTEO      Methyl-Triethoxysilan
WAV      Wasseraufnahme des Formkörpers [%]
BZF      Biegezugfestigkeit

## EP 1 698 602 B1

**Patentansprüche**

1.  Gipsmischung mit mindestens einem Additiv, **dadurch gekennzeichnet, dass** das Additiv enthält:

    A) mindestens ein Alkoxysilan der allgemeinem Formel

    $$R_x Si(OR')_y$$

    und/oder mindestens ein alkoxyfunktionelles Polysiloxan enthaltend mindestens zwei gleiche oder verschiedene $SiR_m(-O\,R')_n$-Gruppen,
    wobei

    R ist jeweils unabhängig voneinander ein unsubstituierter oder substituierter Aryl- oder Alkyl- oder Alkenylrest mit 1 bis 20 Kohlenstoffatomen,
    x ist eine ganze Zahl von 0 bis 3,
    R' ist jeweils unabhängig voneinander ein Alkylrest mit 1 bis 4 Kohlenstoffatomen,
    y ist eine ganze Zahl von 1 bis 4,
    wobei die Summe aus x+y = 4 ist, und
    m ist eine ganze Zahl von 0 bis 2 und n ist eine ganze Zahl von 1 bis 3, wobei die Summe aus $m+n \leq 3$ ist, und

    B) mindestens einem Salz von Mineralsäuren und Metallen der Nebengruppen IIIB bis VIII, IB oder IIB des Periodensystems der Elemente.

2.  Gipsmischung nach Anspruch 1, **dadurch gekennzeichnet, dass** als Komponente A) mindestens ein Alkoxysilan der allgemeinem Formel $R_x Si(OR')_y$ und/oder mindestens ein alkoxyfunktionelles Polysiloxan enthaltend mindestens zwei gleiche oder verschiedene $SiR_m(-O\,R')_n$-Gruppen enthalten ist, wobei

    R ist jeweils unabhängig voneinander ein substituierter oder unsubstituierter Aryl- oder Alkyl- oder Alkenylreste mit 1 bis 18 Kohlenstoffatomen,
    x ist 0 oder 1
    R' ist ein Alkylrest mit 1 bis 4 Kohlenstoffatomen und
    y ist 3 oder 4,

    wobei die Summe aus x+y = 4 ist.

3.  Gipsmischung nach einem der Ansprüche 1 oder 2, **dadurch gekennzeichnet, dass** x = 0 ist.

4.  Gipsmischung nach einem der Ansprüche 1 oder 2, **dadurch gekennzeichnet, dass** x = 1 ist.

5.  Gipsmischung nach einem der Ansprüche 1 bis 4, **dadurch gekennzeichnet, dass** R für jeweils gleiche oder verschiedene Aryl- oder Alkyl- oder Alkenylreste mit 1 bis 6 Kohlenstoffatomen steht, die jeweils unabhängig voneinander substituiert oder unsubstituiert sind.

6.  Gipsmischung nach einem der Ansprüche 1 bis 5, **dadurch gekennzeichnet, dass** R für jeweils gleiche oder verschiedene Aryl- oder Alkyl- oder Alkenylreste mit 7 bis 18 Kohlenstoffatomen steht, die jeweils unabhängig voneinander substituiert oder unsubstituiert sind.

7.  Gipsmischung nach einem der Ansprüche 1 bis 6, **dadurch gekennzeichnet, dass** R ein Alkylrest ist.

8.  Gipsmischung nach einem der Ansprüche 1 bis 7, **dadurch gekennzeichnet, dass** mindestens ein Alkoxysilan ausgewählt aus der Gruppe Tetraethoxysilan, Chlor-Propyl-Triethoxysilan, Octyl-Triethoxysilan, Hexadecyl-Trimethoxysilan, Methyl-Triethoxysilan verwendet wird, einschließlich Oligomere eines oder mehrerer dieser Alkoxysilane.

9.  Gipsmischung gemäß einem der Ansprüche 1 bis 8, **dadurch gekennzeichnet, dass** als Komponente B) mindestens ein mineralsaures Metallsalz eines oder mehrerer Metalle ausgewählt aus der Gruppe Titan, Vanadium, Mangan, Eisen, Cobalt, Nickel, Kupfer oder Zink eingesetzt wird.

10. Gipsmischung gemäß einem der Ansprüche 1 bis 9, **dadurch gekennzeichnet, dass** als Komponente B) mineralsaure Salze des zweiwertigen Eisens eingesetzt werden.

11. Gipsmischung gemäß einem der Ansprüche 1 bis 10, **dadurch gekennzeichnet, dass** als Komponente B) Eisen (II)sulfat eingesetzt wird.

12. Gipsmischung nach einem der Ansprüche 1 bis 11, **dadurch gekennzeiehnet, dass** die Komponente A) bezogen auf das Trockengewicht der Gipsmischung in einem Gehalt von 0,1 bis 5 Gew.-% vorliegt.

13. Gipsmischung nach einem der Ansprüche 1 bis 12, **dadurch gekennzeichnet, dass** die Komponenten A) und B) in einem Gewichtsverhältnis von A:B = 10:1 bis 1:10 vorliegen.

14. Verfahren zur Herstellung von Gipsmischungen nach einem der Ansprüche 1 bis 13 durch Additivierung von Gips mit A) mindestens einem Alkoxysilan der allgemeinem Formel

$$R_xSi(OR')_y$$

und/oder mindestens ein alkoxyfunktionelles Polysiloxan enthaltend mindestens zwei gleiche oder verschiedene $SiR_m(\text{-O }R')_n$ -Gruppen,
wobei

R ist jeweils unabhängig voneinander ein unsubstituierter oder substituierter Aryl- oder Alkyl- oder Alkenylrest mit 1 bis 20 Kohlenstoffatomen
x ist eine ganze Zahl von 0 bis 3,
R' ist jeweils unabhängig voneinander ein Alkylrest mit 1 bis 4 Kohlenstoffatomen,
y ist eine ganze Zahl von 1 bis 4,
wobei die Summe aus x+y = 4 ist, und
m ist eine ganze Zahl von 0 bis 2 und n ist eine ganze Zahl von 1 bis 3, wobei die Summe aus $m+n \leq 3$ ist, und
B) mindestens einem Salz von Mineralsäuren und Metallen der Nebengruppen IIIB bis VIII, IB oder IIB des Periodensystems der Elemente,

wobei die Komponenten A) und B) gleichmäßig im Gips dispergiert werden.

15. Gipsformkörper, zumindest teilweise oder zumindest im Wesentlichen vollständig hergestellt aus einer Gipsmischung gemäß einem der Ansprüche 1 bis 13.

16. Gipskartonplatte, zumindest teilweise oder zumindest im Wesentlichen vollständig hergestellt aus einer Gipsmischung nach einem der Ansprüche 1 bis 13.

**Claims**

1. A gypsum mixture including at least one additive, **characterized in that** the additive contains:

A) at least one alkoxysilane of the general formula

$$R_xSi(OR')_y$$

and/or at least one alkoxy-functional polysiloxane containing at least two identical or different $SiR_m(\text{-O }R')_n$ groups,
wherein
taken independently, R is an unsubstituted or substituted aryl radical or alkyl radical or alkenyl radical having 1 to 20 carbon atoms,

x is an integer from 0 to 3,
taken independently, R' is an alkyl radical having 1 to 4 carbon atoms;
y is an integer from 1 to 4,
wherein the sum of x + y = 4, and
m is an integer from 0 to 2, and n is an integer from 1 to 3, wherein the sum of $m + n \leq 3$, and

B) at least one salt of mineral acids and metals of the subgroups IIIB to VIII, IB or IIB of the periodic table of elements.

**2.** The gypsum mixture according to claim 1, **characterized in that** it contains as component A) at least one alkoxysilane of the general formula $R_xSi(OR')_y$ and/or at least one alkoxy-functional polysiloxane containing at least two identical or different $SiR_m(-O\,R')_n$ groups, wherein
taken independently, R is a substituted or unsubstituted aryl radical or alkyl radical or alkenyl radical having 1 to 18 carbon atoms,
x is 0 or 1,
R' is an alkyl radical having 1 to 4 carbon atoms, and y is 3 or 4,
wherein the sum of x + y =4.

**3.** The gypsum mixture according to one of the claims 1 or 2, **characterized in that** x = 0.

**4.** The gypsum mixture according to one of the claims 1 or 2, **characterized in that** x = 1.

**5.** The gypsum mixture according to any one of claims 1 to 4, **characterized in that** R respectively represents identical or different aryl radicals or alkyl radicals or alkenyl radicals having 1 to 6 carbon atoms, which are each independently substituted or unsubstituted.

**6.** The gypsum mixture according to any one of claims 1 to 5, **characterized in that** R respectively represents identical or different aryl radicals or alkyl radicals or alkenyl radicals having 7 to 18 carbon atoms, which are each independently substituted or unsubstituted.

**7.** The gypsum mixture according to any one of claims 1 to 6, **characterized in that** R is an alkyl radical.

**8.** The gypsum mixture according to any one of claims 1 to 7, **characterized in that** at least one alkoxysilane is used, selected from the group of tetraethoxysilane, chloropropyltriethoxysilane, octyltriethoxysilane, hexadecyltrimethoxysilane, methyltriethoxysilane, including oligomers of one or more of these alkoxysilanes.

**9.** The gypsum mixture according to any one of claims 1 to 8, **characterized in that** as component B), at least one mineral acid metallic salt of one or more metals is used, selected from the group of titanium, vanadium, manganese, iron, cobalt, nickel, copper or zinc.

**10.** The gypsum mixture according to any one of claims 1 to 9, **characterized in that** mineral acid salts of bivalent iron are used as component B).

**11.** The gypsum mixture according to any one of claims 1 to 10, **characterized in that** iron(II) sulfate is used as component B).

**12.** The gypsum mixture according to any one of claims 1 to 11, **characterized in that** component A) is present at a percentage of 0.1 to 5% by weight relative the dry weight of the gypsum mixture.

**13.** The gypsum mixture according to any one of claims 1 to 12, **characterized in that** the components A) and B) are present at a weight ratio from A:B = 10:1 to 1:10.

**14.** A method of preparing gypsum mixtures according to any one of claims 1 to 13 by additivation of gypsum with

A) at least one alkoxysilane of the general formula

$$R_xSi(OR')_y$$

and/or at least one alkoxy-functional polysiloxane containing at least two identical or different $SiR_m(-O\,R')_n$ groups,
wherein
taken independently, R is an unsubstituted or substituted aryl radical or alkyl radical or alkenyl radical having 1 to 20 carbon atoms,
x is an integer from 0 to 3,

taken independently, R' is an alkyl radical having 1 to 4 carbon atoms,

y is an integer from 1 to 4,

wherein the sum of x + y = 4; and

m is an integer from 0 to 2, and n is an integer from 1 to 3, wherein the sum of m + n ≤ 3, and

B) at least one salt of mineral acids and metals of the subgroups IIIB to VIII, IB or IIB of the periodic table of elements,

wherein the components A) and B) are uniformly dispersed in the gypsum.

15. A plaster-molded body, at least in part or at least essentially entirely made of a gypsum mixture according to any one of claims 1 to 13.

16. A plasterboard, at least in part or at least essentially entirely made of a gypsum mixture according to any one of claims 1 through 13.

## Revendications

1.  Mélange de plâtre comprenant au moins un additif, **caractérisé en ce que** l'additif contient :

    A) au moins un alcoxysilane répondant à la formule générale

    $$R_xSi(OR')_y$$

    et/ou au moins un polysiloxane alcoxyfonctionnel contenant au moins deux groupes $SiR_m(\text{-O R'})_n$ identiques ou différents,

    R étant dans chaque cas, indépendamment l'un de l'autre, un reste aryle ou alkyle ou alkényle, substitué ou non substitué, présentant 1 à 20 atomes de carbone,

    x étant un nombre entier de 0 à 3,

    R' étant dans chaque cas, indépendamment l'un de l'autre, un reste alkyle présentant 1 à 4 atomes de carbone,

    y étant un nombre entier de 1 à 4,

    la somme de x + y étant = 4, et

    m étant un nombre entier de 0 à 2 et n étant un nombre entier de 1 à 3, la somme de m + n étant ≤ 3, et

    B) au moins un sel d'acides minéraux et de métaux des sous-groupes IIIB à VIII, IB ou IIB de la classification périodique des éléments.

2.  Mélange de plâtre selon la revendication 1, **caractérisé en ce qu'**il contient comme composant A) au moins un alcoxysilane de formule générale $R_xSi(OR')_y$ et/ou au moins un polysiloxane alcoxyfonctionnel contenant au moins deux groupes $SiR_m(\text{-O R'})_n$ identiques ou différents,

    R étant dans chaque cas, indépendamment l'un de l'autre, un reste aryle ou alkyle ou alkényle, substitué ou non substitué, présentant 1 à 18 atomes de carbone,

    x étant 0 ou 1,

    R' étant un reste alkyle présentant 1 à 4 atomes de carbone et

    y étant 3 ou 4,

    la somme de x + y étant = 4.

3.  Mélange de plâtre selon l'une des revendications 1 ou 2, **caractérisé en ce que** x est = 0.

4.  Mélange de plâtre selon l'une des revendications 1 ou 2, **caractérisé en ce que** x est = 1.

5.  Mélange de plâtre selon l'une des revendications 1 à 4, **caractérisé en ce que** R représente des restes aryles ou alkyles ou alkényles respectivement identiques ou différents, présentant 1 à 6 atomes de carbone, et étant dans chaque cas, indépendamment l'un de l'autre, substitués ou non substitués.

6.  Mélange de plâtre selon l'une des revendications 1 à 5, **caractérisé en ce que** R représente des restes aryles ou alkyles ou alkényles respectivement identiques ou différents, présentant 7 à 18 atomes de carbone, et étant dans chaque cas, indépendamment l'un de l'autre, substitués ou non substitués.

**7.** Mélange de plâtre selon l'une des revendications 1 à 6, **caractérisé en ce que** R est un reste alkyle.

**8.** Mélange de plâtre selon l'une des revendications 1 à 7, **caractérisé en ce qu'**au moins un alcoxysilane sélectionné parmi le tétraéthoxysilane, le triéthoxysilane de chloropropyle, le triéthoxysilane d'octyle, le triméthoxysilane d'hexadécyle, le triéthoxysilane de méthyle, y compris les oligomères de l'un ou de plusieurs de ces alcoxysilanes, est utilisé.

**9.** Mélange de plâtre selon l'une des revendications 1 à 8, **caractérisé en ce qu'**au moins un sel acide minéral métallique d'un ou de plusieurs métaux, sélectionné parmi le titane, le vanadium, le manganèse, le fer, le cobalt, le nickel, le cuivre ou le zinc, est utilisé comme composant B).

**10.** Mélange de plâtre selon l'une des revendications 1 à 9, **caractérisé en ce que** des sels acides minéraux du fer bivalent sont utilisés comme composant B).

**11.** Mélange de plâtre selon l'une des revendications 1 à 10, **caractérisé en ce que** du sulfate de fer (II) est utilisé comme composant B).

**12.** Mélange de plâtre selon l'une des revendications 1 à 11, **caractérisé en ce que** le composant A) est présent dans une teneur de 0,1 à 5 % en poids par rapport au poids à sec du mélange de plâtre.

**13.** Mélange de plâtre selon l'une des revendications 1 à 12, **caractérisé en ce que** les composants A) et B) sont présents dans un rapport de poids de A:B = 10:1 à 1:10.

**14.** Procédé de fabrication de mélanges de plâtre selon l'une des revendications 1 à 13 par additivation de plâtre avec

    A) au moins un alcoxysilane répondant à la formule générale

$$R_x Si (OR')_y$$

    et/ou au moins un polysiloxane alcoxyfonctionnel contenant au moins deux groupes $SiR_m(-O R')_n$ identiques ou différents,
    R étant dans chaque cas, indépendamment l'un de l'autre, un reste aryle ou alkyle ou alkényle, substitué ou non substitué, présentant 1 à 20 atomes de carbone,
    x étant un nombre entier de 0 à 3,
    R' étant dans chaque cas, indépendamment l'un de l'autre, un reste alkyle présentant 1 à 4 atomes de carbone,
    y étant un nombre entier de 1 à 4,
    la somme de x + y étant = 4, et
    m étant un nombre entier de 0 à 2 et n étant un nombre entier de 1 à 3, la somme de m + n étant ≤ 3, et
    B) au moins un sel d'acides minéraux et de métaux des sous-groupes IIIB à VIII, IB ou IIB de la classification périodique des éléments,
    les composants A) et B) étant uniformément dispersés dans le plâtre.

**15.** Corps moulé en plâtre, fabriqué au moins en partie ou au moins sensiblement entièrement à partir d'un mélange de plâtre répondant à l'une des revendications 1 à 13.

**16.** Plaque de placoplâtre, fabriquée au moins en partie ou au moins sensiblement entièrement à partir d'un mélange de plâtre répondant à l'une des revendications 1 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1404512 A
- DE 10220659 A1
- DE 3041294
- EP 0819663 A
- US 5776245 A
- WO 08101702 A